# EUROPÄISCHE PATENTSCHRIFT

(11) **EP 4 160 070 B1**
(45) Veröffentlichungstag und Bekanntmachung des Hinweises auf die Patenterteilung: **04.12.2024**
(21) Anmeldenummer: 21200104.4
(22) Anmeldetag: 30.09.2021
(51) Int. Cl.: B64C 1/06, B64C 1/18, F16L 3/24, F16L 3/22, B64F 5/10, F16L 3/133, B65G 9/00

(54) **STRUKTUR- UND AUSSTATTUNGSSYSTEM ZUR INSTALLATION IN EINEM LUFTFAHRZEUG**
STRUCTURAL AND EQUIPMENT SYSTEM FOR INSTALLATION IN AN AIRCRAFT
SYSTÈME STRUCTURAL ET D'ÉQUIPEMENT DESTINÉ À L'INSTALLATION DANS UN AÉRONEF

(43) Veröffentlichungstag der Anmeldung: 05.04.2023
(73) Patentinhaber: Airbus Operations GmbH, 21129 Hamburg (DE)
(72) Erfinder: Hegenbart, Matthias, 21129 Hamburg (DE); Zahlen, Pierre, 21129 Hamburg (DE)
(74) Vertreter: LKGLOBAL Lorenz & Kopf Patentanwalt Attorney at Law PartG mbB

(56) Entgegenhaltungen:
- EP-A1- 3 838 743
- DE-A1- 102009 056 593
- US-A1- 2010 031 509
- US-A1- 2021 188 417

## Beschreibung

### Technisches Gebiet

Die vorliegende Beschreibung betrifft ein Struktur- und Ausstattungssystem zur Installation in einem Luftfahrzeug, ein Luftfahrzeug und ein Verfahren zum Herstellen einer lasttragenden Struktur.

### Technischer Hintergrund

Bei der Endmontage eines Luftfahrzeugs werden Strukturbauteile und Ausstattungskomponenten üblicherweise manuell gehandhabt und installiert. Beispielsweise werden für Unterflurbereiche Vertikalstützen einzeln in einen Rumpf hineingetragen, dort manuell ausgerichtet und mit Verbindungselementen an Querträgern und Spanten angeschlossen. Gleichzeitig werden Ausstattungskomponenten, die mit den Vertikalstützen verbunden sind oder direkt daneben verlaufen, ebenso Stück für Stück befestigt. Aufgrund der Größe eines Luftfahrzeugs und der Komplexität der Ausstattung ist die Endmontage ein aufwendiger Prozess.

WO2021122322A1 zeigt ein Komponentensystem zur Innenausstattung eines Luftfahrzeugs, aufweisend mindestens eine Ausstattungskomponente, mehrere Komponentenschienen, mehrere mit den Komponentenschienen in Eingriff bringbare und relativ an den Komponentenschienen bewegbare Führungselemente, mehrere Halteelemente, die mit den Führungselementen verbunden sind und dazu ausgebildet sind, mit einer Rumpfstruktur des Luftfahrzeugs oder der mindestens einen Ausstattungskomponente gekoppelt zu werden, und mehrere Arretiereinheiten, die an den Komponentenschienen und/oder an den Führungselementen angeordnet und dazu ausgebildet sind, die Führungselemente an einer jeweiligen Komponentenschiene zu arretieren. Zumindest zwei der Komponentenschienen sind an der mindestens einen Ausstattungskomponente oder der Rumpfstruktur in einem Abstand und parallel zueinander angeordnet, sodass die Ausstattungskomponente mittels der Komponentenschienen an in dem Luftfahrzeug räumlich festgelegten Führungselementen bzw. Komponentenschienen einschiebbar und an einer eingeschobenen Position durch die Arretiereinheiten arretierbar ist.

Die Druckschrift US 2021/188417 A1 beschreibt, laut der bei Espacenet verfügbaren Übersetzung, einen Flugzeugrumpfabschnitt, der sich in einer allgemeinen Längsrichtung erstreckt und eine Rumpfstruktur umfasst, die ringförmige Rahmen und einen flachen Boden umfasst. Der Rumpfabschnitt umfasst außerdem Streben, die in einer Sollposition senkrecht zum Boden stehen und sich vom Boden bis zu einem Rahmen erstrecken. Jede Strebe umfasst in der Nähe von mindestens einem ihrer Enden eine lösbare Verbindung, so dass die Strebe relativ zur Rumpfstruktur bewegt oder von der Rumpfstruktur getrennt werden kann, um vorübergehend Zugang zu einem zwischen den Spanten befindlichen Dreiecksbereich zu gewähren, wenn Boden und Streben in Sollposition sind. Dies ermöglicht den Zugang zu dem Bereich, in dem die Leitungen im Flugzeug installiert werden müssen, insbesondere in Form von Leitungssätzen, die vor ihrer Installation im Flugzeugrumpf zusammengebaut werden.

### Beschreibung

Es kann als Aufgabe betrachtet werden, ein System oder ein Verfahren bereitzustellen, mit dem eine vereinfachte Montage einer Struktur durchführbar ist.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Struktur- und Ausstattungssystem zur Installation in einem Luftfahrzeug vorgeschlagen, aufweisend mehrere Vertikalstützen, eine Schienenvorrichtung, mindestens ein Verbindungsglied, mehrere Führungselemente, mehrere Schwenkgelenke, und mehrere Verriegelungsvorrichtungen, wobei die Schienenvorrichtung an einer Struktur des Luftfahrzeugs anbringbar ist und dazu ausgebildet ist, die Führungselemente entlang einer Erstreckungsachse der Schienenvorrichtung zu führen und dabei relativ zu der Struktur zu bewegen, wobei die Vertikalstützen mittels des mindestens einen Verbindungsglieds parallel und in einem Abstand zueinander angeordnet und zu einer Gitteranordnung verbunden sind, wobei die Führungselemente an der Gitteranordnung angeordnet sind, wobei die Schwenkgelenke an oberen Enden der Vertikalstützen angebracht sind und dazu ausgebildet sind, die Vertikalstützen um ihr oberes Ende zu verschwenken, wobei die Verriegelungsvorrichtungen jeweils ein erstes Verriegelungselement, das an einem unteren Enden einer Vertikalstütze angeordnet ist und in ein an der Struktur positionierbares zweites Verriegelungselement verriegelbar ist, aufweisen, und wobei die Gitteranordnung mittels der Führungselemente an der Schienenvorrichtung mit aus der Vertikalen aufwärts geschwenkten Vertikalstützen in die Struktur des Luftfahrzeugs zu einer Installationsposition einschiebbar ist, durch Herabschwenken in eine vertikale Ausrichtung die ersten Verriegelungselemente in korrespondierend angeordneten zweiten Verriegelungselementen verriegeln können, sodass dadurch eine lasttragende Stützstruktur ausbildbar ist.

Die Vertikalstützen sind dazu vorgesehen, insbesondere Fußbodenträger vertikal an der Struktur des Luftfahrzeugs abzustützen. Es ist vorstellbar, dass sich die Vertikalstützen von einem seitlichen Bereich eines Fußbodenquerträgers in einem Abstand zu der Außenhaut des Rumpfs vertikal nach unten erstrecken und dort mit einem Spant verbunden werden. Hierdurch ergibt sich eine insbesondere für Verkehrsflugzeuge bekannte Dreiecksstruktur, welche zwischen der Rumpfaußenhaut, einem Frachtraum und einer Passagierkabine eingeschlossen ist. Die Vertikalstützen sind oftmals aus einem faserverstärkten Kunststoff, insbesondere kohlefaserverstärkten Kunststoff, hergestellt.

Die Schienenvorrichtung ist zumindest temporär für die Installation der Vertikalstützen an der Struktur vorgesehen. Die Schienenvorrichtung könnte etwa eine Schiene ausbilden, die sich parallel zu einer Längsachse des Rumpfes erstreckt und beispielsweise an Fußbodenquerträgern angeordnet wird. Die Schienenvorrichtung könnte dabei einen Hohlquerschnitt aufweisen, in dem Führungselemente führbar sind. Es könnte jedoch auch ein an seiner Außenseite entsprechend ausgebildeter Querschnitt vorliegen, der das Aufnehmen und Führen der Führungselemente erlaubt.

Die Führungselemente sind an die Schienenvorrichtung anzupassen. Sie könnte beispielsweise auf einer Gleitführung basieren, sodass die Führungselemente gleitfähig sind und zwei oder mehr Begrenzungsflächen aufweisen, die mit einer korrespondierenden Gleitfläche der Schienenvorrichtung in Eingriff geraten. Es sind jedoch auch Wälzkörper und insbesondere Rollen denkbar, die an der Schienenvorrichtung entlang rollen können. Ziel ist, die Gitteranordnung von außerhalb des Rumpfes in diesen hinein verschieben zu können und dort an eine vorgesehene Installationsposition zu bewegen. Dies könnte je nach der Größe des Luftfahrzeugs eine beträchtliche Strecke sein, sodass die Führungselemente und die Schienenvorrichtung ein einfaches Bewegen erlauben sollten.

Die Gitteranordnung umfasst mehrere Vertikalstützen, die parallel zueinander angeordnet sind und einen Abstand zueinander einschließen. Der Abstand sollte dabei dem Rastermaß von Spantfeldern oder einem anderen Rastermaß entsprechen, wenn die Struktur keine Spanten vorsieht. Die Gitteranordnung kann folglich außerhalb des Rumpfs vorbereitet aus einer aufwärts geschwenkten Position in eine Vertikale verschwenkt werden, um dort mit den Positionen von Spanten oder ähnlichen Versteifungselementen zu korrespondieren.

Zum Befestigen der unteren Enden der Vertikalstützen sind die Verriegelungsvorrichtungen vorgesehen. Diese weisen zwei Verriegelungselemente auf, die insbesondere formschlüssig ineinandergreifen können. Durch Verschwenken einer Vertikalstütze mit einem am unteren Ende angeordneten ersten Verriegelungselement kann sich dieses dem zweiten Verriegelungselement annähern und dann in dieses eingreifen. Bei der Verwendung mehrerer erster Verriegelungselemente, insbesondere einem ersten Verriegelungselement an jeder Vertikalstütze, können sämtliche Vertikalstützen in ein zweites Verriegelungselement einrasten bzw. damit verriegeln. Damit wird automatisch die vorangehend erwähnte Dreiecksstruktur hergestellt. Die unteren Enden der Vertikalstützen sind durch die Verriegelungsvorrichtungen bevorzugt in allen Raumrichtungen fixierbar.

Die Gitteranordnung erfordert dabei das mindestens eine Verbindungsglied, welches die einzelnen Vertikalstützen in ihrem Abstand zueinander halten soll. Hierfür können dedizierte Bauteile verwendet werden, die beispielsweise direkt nach dem Hinabschwenken der Vertikalstützen wieder entfernt werden können. Alternativ dazu wären auch notwendige Einbauten denkbar, die eine längliche Erstreckung aufweisen und in der Dreiecksstruktur verlaufen. Hierfür kommen beispielsweise Installationsleitungen, Medienleitungen und dergleichen infrage. Diese können bereits bei der Herstellung der Gitteranordnung als Verbindungsglied verwendet werden, um die Vertikalstützen entsprechend zueinander zu platzieren.

Es ist weiterhin besonders bevorzugt, wenn die Vertikalstützen an ihren oberen Enden strukturfest verbunden sind. Dies bedeutet, dass die oberen Enden der Vertikalstützen in allen Freiheitsgraden blockiert werden. Dazu könnten die Schwenkgelenke entsprechend ausgebildet sein, d.h. sie blockieren bzw. arretieren direkt nach dem Verschwenken der Gitteranordnung, sodass das obere Ende der Vertikalstützen strukturfest ist. Andere Varianten sind jedoch auch durchaus denkbar, etwa mittels eines Riegels, der über die Länge der Schienenvorrichtung betätigt wird. Splint- oder Schraubensicherungen wären ebenso möglich.

Durch das erfindungsgemäße Struktur- und Ausstattungssystem ergibt sich eine rasch durchführbare und präzise Herstellung einer lasttragenden Stützstruktur, bei der die Installationszeit im Innern eines Rumpfes eines Luftfahrzeugs deutlich verringert und der Installationsaufwand vereinfacht wird.

Die Führungselemente könnten an der Schienenvorrichtung verriegelbar sein. Die Führungselemente können nach dem Verriegeln folglich nicht mehr entlang der Schienenvorrichtung bewegt werden. Ihre Relativposition zu der Struktur wird dadurch festgelegt. Das Verriegeln kann durch eine Verschraubung, einen Sicherungsstift oder ähnliches realisierbar sein.

Die Führungselemente könnten als Rollen ausgebildet sein. Die Rollen können so ausgebildet sein, dass sie möglichst spielfrei in der Schienenvorrichtung rollen, sodass sie dauerhaft in der Schienenvorrichtung verbleiben könnten. Es ist zudem denkbar, die Rollen durch eine Achse an einzelnen Vertikalstützen zu lagern und die Achsen nach dem Einbau der Gitteranordnung an der Schienenvorrichtung zu fixieren.

Die Schienenvorrichtung könnte einen Schienenstrang mit mehreren Schienenteilstücken aufweisen. Die Schienenteilstücke erlauben eine vereinfachte Installation der Schienenvorrichtung, da die Schienenteilstücke stirnseitig aufeinanderfolgen und beliebig ergänzt bzw. fortgesetzt werden können. Die Schienenteilstücke können insbesondere einen gleich bleibenden Profilquerschnitt aufweisen und etwa durch Strangpressen hergestellt sein. Sie sind folglich bevorzugt einfache Profilbauteile.

Die Schienenteilstücke könnten in einem stirnseitigen Abstand zueinander an der Struktur befestigbar und bei eingeschobener Gitteranordnung aus der Struktur des Luftfahrzeugs entfernbar sein. Die Schienenteilstücke können derart bemessen sein, dass sie leicht handhabbar sind, um auch bei positionierter Gitteranordnung Stück für Stück entnommen werden zu können. Es ist vorstellbar, dass die Schienenteilstücke eine Länge aufweisen, die den Abstand zwischen zwei Führungselementen etwas unterschreitet. So könnte für jedes Paar von Führungselementen ein Schienenteilstück vorgesehen sein.

Die Schienenvorrichtung könnte bei hergestellter Stützstruktur an der Struktur des Luftfahrzeugs verbleiben. Die Schienenvorrichtung übernimmt folglich die Lasteinleitung von den Vertikalstützen in die Struktur des Luftfahrzeugs über die Führungselemente. An dieser Stelle könnte es besonders vorteilhaft sein, wie vorangehend dargestellt, die Führungselemente in der Schienenvorrichtung arretieren zu können.

Ferner könnte das Struktur- und Ausstattungssystem eine an der Struktur befestigbare elektrische Kontaktschiene zum Übertragen von elektrischer Leistung und/oder Daten und mindestens einen in der Kontaktschiene verschiebbar angeordneten Abnehmer, der mit mindestens einer an der Gitteranordnung befestigbaren Komponente verbindbar ist, aufweisen. Die elektrische Kontaktschiene erlaubt eine sehr einfache Anbindung von Verbrauchern für elektrische Leistung oder von Daten. Der Abnehmer könnte ebenso wie ein Führungselement in der elektrischen Kontaktschiene verschiebbar angeordnet sein. Die Kontaktschiene könnte zwei oder mehr Leiter an einer inneren und/oder äußeren Oberfläche aufweisen, die mit einem Bordsystem verbunden sind und entlang der gesamten Kontaktschiene kontaktiert werden können. Der Abnehmer ist korrespondierend hierzu ausgestaltet und weist folglich Schleifelemente oder ähnliches an einer äußeren und/oder inneren Oberfläche auf und kann über eine Leitung mit dem entsprechenden Verbraucher verbunden sein. Es ist selbstverständlich vorstellbar, dass mehrere Abnehmer gleichzeitig in der Kontaktschiene angeordnet sind und mehrere Verbraucher mit elektrischer Leistung und/oder Daten verbinden.

Die elektrische Kontaktschiene könnte in die Schienenvorrichtung integriert sein. Die elektrische Kontaktschiene könnte in einem Führungsprofil der Schienenvorrichtung integriert sein, beispielsweise in einem inneren Hohlraum der Schienenvorrichtung. Sie könnte allerdings auch an einen Außenquerschnitt anschließen bzw. damit verbunden sein. Beim Einschieben der Gitteranordnung ist gleichzeitig eine Anbindung an die elektrische Kontaktschiene erfolgt.

Das Struktur- und Ausstattungssystem könnte ferner mindestens ein Verkleidungspaneel aufweisen, das an der Gitteranordnung angeordnet ist. Das Verkleidungspaneel könnte eine Wandverkleidung sein und an einer nach innen gewandten Seite der Gitteranordnung befestigt sein. Es ist vorstellbar, dass das mindestens eine Verkleidungspaneel das mindestens eine Verbindungsglied ausbildet.

Das mindestens eine Verbindungsglied könnte eine Versorgungsleitung aufweisen, die auf einer lateral nach außen gerichteten Seite der Stützstruktur angeordnet ist. Die Versorgungsleitung könnte eine Fluidleitung oder eine elektrische Leitung sein. Ist diese ausreichend starr, kann mit ihr ohne weiteres temporär eine Gitteranordnung zur Realisierung des vorangehend dargestellten Vorgehens kreiert werden.

Die Erfindung betrifft ferner ein Flugzeug, aufweisend einen durch eine Struktur ausgebildeten Rumpf und mindestens ein Struktur- und Ausstattungssystem gemäß der vorangehenden Beschreibung, wobei das Struktur- und Ausstattungssystem in dem Rumpf positioniert und mit der Struktur verbunden ist.

Weiterhin betrifft die Erfindung, analog zu den vorangehenden Ausführungen, ein Verfahren zum Herstellen einer lasttragenden Stützstruktur, aufweisend die Schritte des Verbindens mehrerer parallel und in einem Abstand zueinander angeordneter Vertikalstützen mittels mindestens eines Verbindungsglieds zu einer Gitteranordnung, des Anbringens einer Schienenvorrichtung an einer Struktur eines Luftfahrzeugs, des Einhängens der Gitteranordnung mittels mehrerer Führungselemente an die Schienenvorrichtung, sodass die Gitteranordnung von der Schienenvorrichtung herunterhängt, des Einschiebens der Gitteranordnung mittels der Führungselemente an der Schienenvorrichtung zu einer Installationsposition, des Ausrichtens der Gitteranordnung durch Schwenken um Schwenkgelenke an oberen Enden der Vertikalstützen derart, dass die Vertikalstützen vertikal angeordnet sind, und des Verbindens der Vertikalstützen mit der Struktur durch Verriegeln von ersten Verriegelungselementen, die an unteren Enden der Vertikalstützen angeordnet sind, mit an der Struktur angeordneten zweiten Verriegelungselementen, sodass dadurch eine lasttragende Stützstruktur ausgebildet wird.

Das Verfahren könnte ferner das Arretieren der Führungselemente an der Schienenvorrichtung aufweisen.

Das Verfahren könnte ferner das an das Verbinden der Vertikalstützen anschließende Entfernen von Schienenteilstücken zwischen den einzelnen Führungselementen aufweisen.

Das Verfahren könnte ferner das Anordnen mindestens eines elektrischen Verbrauchers an der Gitteranordnung und Verbinden mittels einer Leitung mit einem elektrischen Abnehmer vor dem Einhängen in die Schienenvorrichtung, und das Verschieben des Abnehmers in einer in der Schienenvorrichtung integrierten elektrischen Kontaktschiene beim Verschieben der Gitteranordnung zum Herstellen einer elektrischen Verbindung des mindestens einen elektrischen Verbrauchers an der Installationsposition aufweisen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a bis 1d: Ein Struktur- und Ausstattungssystem in einem Rumpf eines Luftfahrzeugs in mehreren schematischen Ansichten.
- Fig. 2: eine schematische Darstellung eines oberen Teils einer Vertikalstütze.
- Fig. 3: eine schematische Darstellung eines unteren Teils einer Vertikalstütze.
- Fig. 4: eine schematische Seitenansicht eines installierten Struktur- und Ausstattungssystems.
- Fig. 5: ein Luftfahrzeug.

### Detaillierte Beschreibung von Ausführungsbeispielen

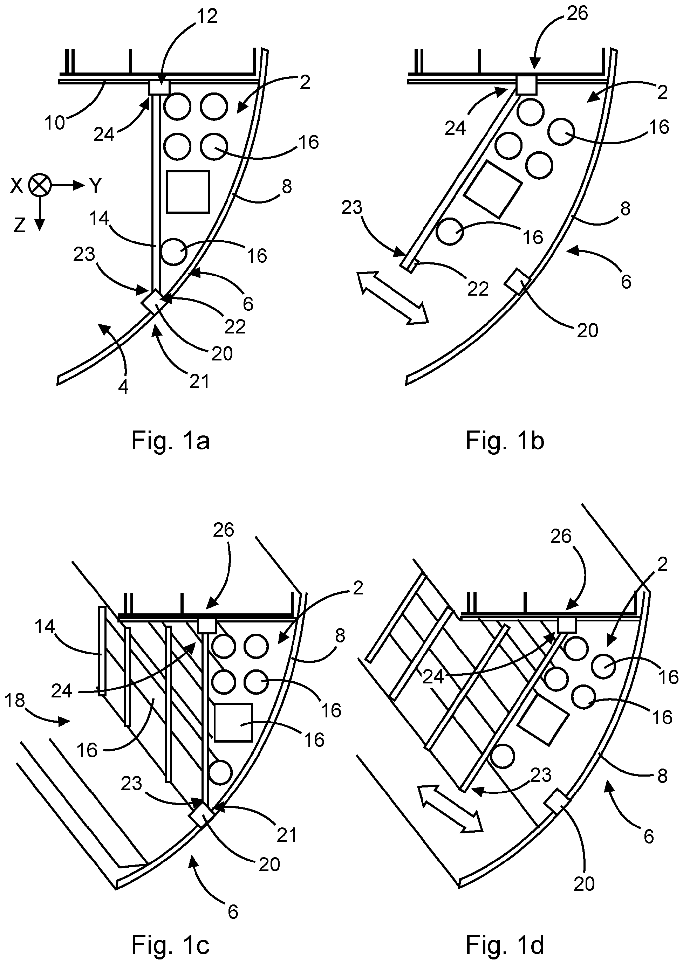

Fig. 1a bis 1d zeigen ein Struktur- und Ausstattungssystem 2 in unterschiedlichen Darstellungen. Hier ist ein Teil eines Rumpf 4 eines Luftfahrzeugs zu sehen, der eine Struktur 6 aufweist. Diese umfasst Spanten 8 und an den Spanten 8 in Querrichtung verlaufende Fußbodenquerträger 10. An einer Unterseite von Fußbodenträgern 10 in einem lateralen Abstand zu den Spanten 8 ist eine Schienenvorrichtung 12 angeordnet, die entlang einer Längsachse x verläuft. Hieran sind Vertikalstützen 14 gehalten, die sich in Fig. 1a und 1c vertikal, d.h. in Z-Richtung von der Schienenvorrichtung 12 nach unten erstrecken.

Wie in Fig. 1c und 1d ersichtlich sind mehrere Vertikalstützen 14 parallel und in einem Abstand zueinander angeordnet und werden über ein Verbindungsglied 16 zu einer Gitteranordnung 18 verbunden. Das Verbindungsglied 16 könnte ein dediziertes Verbindungsglied sein oder eine Medienleitung, die in diesem Bereich des Rumpfs 4 ohnehin zu installieren ist. In Fig. 1b und 1d wird der Vorgang des Verbindens der Vertikalstützen 14 bzw. der Gitteranordnung 18 mit der Struktur 6 gezeigt. Hier ist die Gitteranordnung 18 aus der Vertikalen etwas aufgeschwenkt, sodass sie schräg zu der Z-Achse verläuft. Das Struktur- und Ausstattungssystem 2 erlaubt, die Gitteranordnung 18 in einer etwas aufgeschwenkten Lage durch Verschieben entlang der Schienenvorrichtung 12 in den Rumpf 4 an einer gewünschten Installationsposition entlang der Längsachse X zu platzieren.

An der Struktur 6 und insbesondere an den Spanten 8 sind zweite Verriegelungselemente 20 angeordnet, die mit ersten Verriegelungselementen 22 an einem unteren Ende 23 der Vertikalstützen 14 bzw. der Gitteranordnung 18 korrespondieren. Durch Herabschwenken der Gitteranordnung 18 in die Vertikalen können die ersten Verriegelungselemente 22 mit den zweiten Verriegelungselementen 20 einer Verriegelungsvorrichtung 21 verbunden werden, beispielsweise formschlüssig miteinander verrasten.

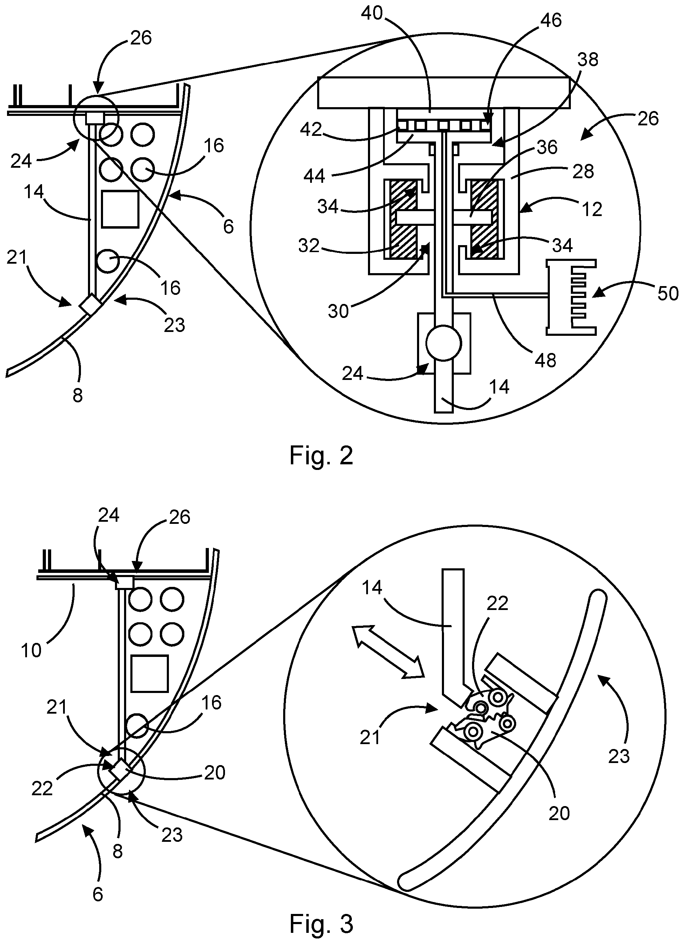

Zum Verschwenken der Vertikalstützen 14 bzw. der Gitteranordnung 18 sind an oberen Enden der Vertikalstützen 14 Schwenkgelenke 24 angeordnet, wie in Fig. 2 gezeigt. Hier ist ein oberes Ende 26 einer Vertikalstütze 14 bzw. der Gitteranordnung 18 gezeigt. An dem oberen Ende 26 befindet sich die Schienenvorrichtung 12, die ein Schienenprofil 28 umfasst. Das Schienenprofil 28 weist einen ersten Hohlraum 30 auf, in dem zwei oder mehr Rollen 32 als Führungselemente geführt sind. Der erste Hohlraum 30 weist zudem Begrenzungskanten 34 auf, die dazu vorgesehen sind, die Rollen 32 möglichst spielfrei in dem ersten Hohlraum 30 entlang der X-Achse verschiebbar zu lagern. Dazu sind beispielhaft zwei in Y-Richtung nebeneinander angeordnete Rollen 32 über eine Achse 36 miteinander verbunden, die sich beispielhaft durch eine von der Gitteranordnung 18 aufgespannte Ebene hindurch erstreckt.

Oberhalb des ersten Hohlraums 30 ist ein zweiter Hohlraum 38 gebildet, der eine elektrische Kontaktschiene 40 umfasst. Hier sind mehrere elektrische Leiter 42 vorgesehen, die von einem Abnehmer 44 elektrisch abgegriffen werden können. Die elektrische Kontaktschiene 40 erstreckt sich bevorzugt entlang der gesamten Schienenvorrichtung 12. An beliebigen Stellen können Abnehmer 44 angeordnet werden, die jeweils Schleifkontakte 46 aufweisen. Von dem betreffenden Abnehmer 44 aus führt eine Leitung 48 zu einem Verbinder 50, der mit einem Verbraucher verbindbar ist.

Unterhalb der Schienenvorrichtung 12 sind die Schwenkgelenke 24 angeordnet, an die sich jeweils direkt eine Vertikalstütze 14 anschließt. Die Verriegelungsvorrichtung 21 am unteren Ende 23 der Vertikalstützen 14 zum Fixieren der betreffenden Vertikalstütze 14 wird in Fig. 3 näher dargestellt.

Fig. 3 zeigt das erste Verriegelungselement 22 im Eingriff mit dem zweiten Verriegelungselement 20. Diese beiden Verriegelungselemente verhaken sich ineinander, sodass sie die an der betreffenden Vertikalstütze entstehende Last in Z- und Y-Richtung in die Struktur 6 übertragen können.

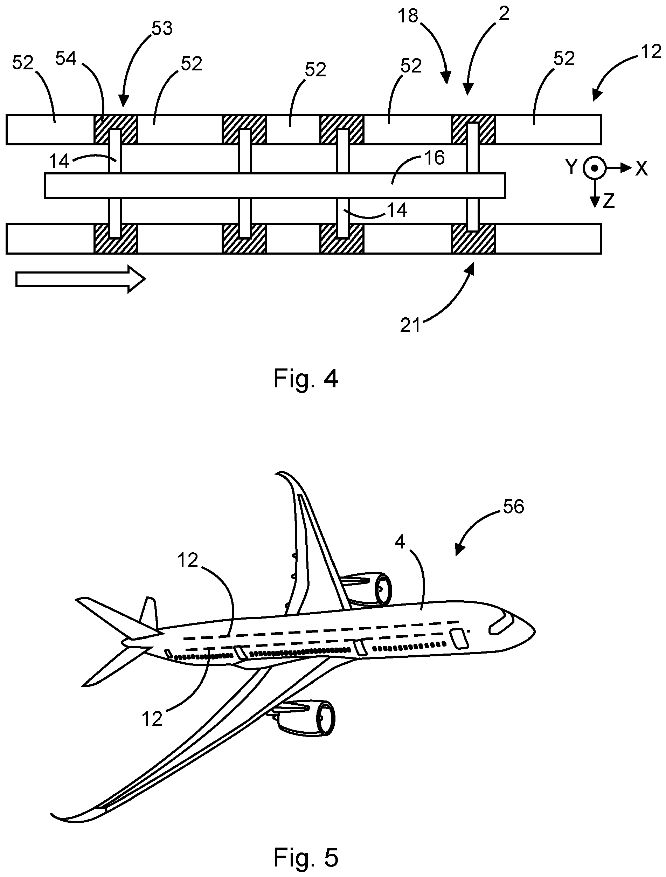

Fig. 4 zeigt eine Seitenansicht auf das Struktur- und Ausstattungssystem 2 im montierten Zustand. Die Betrachtungsrichtung ist dabei von einem Spant 8 auf die Gitteranordnung 18 gerichtet. Die Schienenvorrichtung 12 weist mehrere Schienenteilstücke 52 auf, an denen Führungselemente 54, beispielsweise die vorangehend dargestellten Rollen 32, verschiebbar gelagert sind. Es ist ein flugzeugfestes Koordinatensystem gezeigt. Die X-Achse repräsentiert eine Längsachse des Luftfahrzeugs, in dem das Struktur- und Ausstattungssystem 2 montiert ist. Eine Installationsrichtung, d.h. eine Einschubrichtung, ist parallel zu der X-Achse.

Die Führungselemente 54 sind beispielsweise in der Schienenvorrichtung 12 arretiert, um sich dort nicht mehr weiterbewegen zu können. Die Schienenteilstücke 52 zwischen arretierten Führungselementen 54 können gegebenenfalls ausgebaut werden oder aber an der Struktur 6 verbleiben. Sollen die Teilstücke 52 entfernt werden, ist eine entsprechende Fixierung der Führungselemente 54 mit der Struktur 6 erforderlich. Es ist denkbar, dass lediglich Schienen-Teilstücke 52 zwischen den Führungselementen 54 entfernt werden und schmalere SchienenTeilstücke 53 zum Haltern der Führungselemente 54 an der Struktur 6 verbleiben.

Schließlich zeigt Fig.5 ein Luftfahrzeug 56 mit dem Rumpf 4 und einem darin installierten Struktur- und Ausstattungssystem 2 gemäß der angedeuteten, gestrichelten Linien, die jeweils eine Schienenvorrichtung 12 andeuten. Diese sind in einem Unterflurbereich vorgesehen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Struktur- und Ausstattungssystem
- 4: Rumpf
- 6: Struktur
- 8: Spant
- 10: Fußbodenquerträger
- 12: Schienenvorrichtung
- 14: Vertikalstütze
- 16: Verbindungsglied
- 18: Gitteranordnung
- 20: zweites Verriegelungselement
- 21: Verriegelungsvorrichtung
- 22: erstes Verriegelungselement
- 23: unteres Ende
- 24: Schwenkgelenk
- 26: oberes Ende
- 28: Schienenprofil
- 30: erster Hohlraum
- 32: Rolle
- 34: Begrenzungskante
- 36: Achse
- 38: zweiter Hohlraum
- 40: elektrische Kontaktschiene
- 42: Leiter
- 44: Abnehmer
- 46: Schleifkontakt
- 48: Leitung
- 50: Verbinder
- 52: Schienenteilstück
- 53: Schienenteilstück
- 54: Führungselement
- 56: Luftfahrzeug

## Patentansprüche

1. Struktur- und Ausstattungssystem (2) zur Installation in einem Luftfahrzeug (56), aufweisend:
mehrere Vertikalstützen (14),
eine Schienenvorrichtung (12),
mindestens ein Verbindungsglied (16),
mehrere Führungselemente (32),
mehrere Schwenkgelenke (24), und
mehrere Verriegelungsvorrichtungen (21),
wobei die Schienenvorrichtung (12) an einer Struktur (6) des Luftfahrzeugs (56) anbringbar ist und dazu ausgebildet ist, die Führungselemente (32) entlang einer Erstreckungsachse der Schienenvorrichtung (12) zu führen und dabei relativ zu der Struktur (6) zu bewegen,
wobei die Vertikalstützen (14) mittels des mindestens einen Verbindungsglieds (16) parallel und in einem Abstand zueinander angeordnet und zu einer Gitteranordnung (18) verbunden sind,
wobei die Führungselemente (32) an der Gitteranordnung (18) angeordnet sind,
wobei die Schwenkgelenke (24) an oberen Enden (26) der Vertikalstützen (14) angebracht sind und dazu ausgebildet sind, die Vertikalstützen (14) um ihr oberes Ende (26) zu verschwenken,
wobei die Verriegelungsvorrichtungen (21) jeweils ein erstes Verriegelungselement (22), das an einem unteren Ende (23) einer Vertikalstütze (14) angeordnet ist und in ein an der Struktur (6) positionierbares zweites Verriegelungselement (20) verriegelbar ist, aufweisen, und
wobei die Gitteranordnung (18) mittels der Führungselemente (32) an der Schienenvorrichtung (12) mit aus der Vertikalen aufwärts geschwenkten Vertikalstützen (14) in die Struktur des Luftfahrzeugs (56) zu einer Installationsposition einschiebbar ist, durch Herabschwenken in eine vertikale Ausrichtung die ersten Verriegelungselemente (22) in korrespondierend angeordneten zweiten Verriegelungselementen (20) verriegeln können, sodass dadurch eine lasttragende Stützstruktur ausbildbar ist.

2. Struktur- und Ausstattungssystem (2) nach Anspruch 1,
wobei die Führungselemente (32) an der Schienenvorrichtung (12) verriegelbar sind.

3. Struktur- und Ausstattungssystem (2) nach Anspruch 1 oder 2,
wobei die Führungselemente (32) als Rollen (32) ausgebildet sind.

4. Struktur- und Ausstattungssystem (2) nach einem der vorhergehenden Ansprüche,
wobei die Schienenvorrichtung (12) einen Schienenstrang mit mehreren Schienenteilstücken (52, 53) aufweist.

5. Struktur- und Ausstattungssystem (2) nach Anspruch 4,
wobei die Schienenteilstücke (52, 53) in einem stirnseitigen Abstand zueinander an der Struktur (6) befestigbar und bei eingeschobener Gitteranordnung (18) aus der Struktur (6) des Luftfahrzeugs (56) entfernbar sind.

6. Struktur- und Ausstattungssystem (2) nach einem der Ansprüche 1 bis 4,
wobei die Schienenvorrichtung (12) bei hergestellter Stützstruktur an der Struktur (6) des Luftfahrzeugs (56) verbleibt.

7. Struktur- und Ausstattungssystem (2) nach einem der vorhergehenden Ansprüche, ferner aufweisend
eine an der Struktur (6) befestigbare elektrische Kontaktschiene (40) zum Übertragen von elektrischer Leistung und/oder Daten und
mindestens einen in der Kontaktschiene (40) verschiebbar angeordneten Abnehmer (44), der mit mindestens einer an der Gitteranordnung (18) befestigbaren Komponente verbindbar ist.

8. Struktur- und Ausstattungssystem (2) nach Anspruch 7,
wobei die elektrische Kontaktschiene (40) in die Schienenvorrichtung (12) integriert ist.

9. Struktur- und Ausstattungssystem (2) nach einem der vorhergehenden Ansprüche, ferner aufweisend
mindestens ein Verkleidungspaneel, das an der Gitteranordnung (18) angeordnet ist.

10. Struktur- und Ausstattungssystem (2) nach einem der vorhergehenden Ansprüche,
wobei das mindestens eine Verbindungsglied (16) eine Versorgungsleitung aufweist, die auf einer lateral nach außen gerichteten Seite der Stützstruktur angeordnet ist.

11. Luftfahrzeug (56), aufweisend einen durch eine Struktur ausgebildeten Rumpf (4) und mindestens ein Struktur- und Ausstattungssystem (2) nach einem der vorhergehenden Ansprüche, wobei das Struktur- und Ausstattungssystem (2) in dem Rumpf (4) positioniert und mit der Struktur (6) verbunden ist.

12. Verfahren zum Herstellen einer lasttragenden Stützstruktur, aufweisend die Schritte:
Verbinden mehrerer parallel und in einem Abstand zueinander angeordneter Vertikalstützen (14) mittels mindestens eines Verbindungsglieds (16) zu einer Gitteranordnung (18),
Anbringen einer Schienenvorrichtung (12) an einer Struktur (6) eines Luftfahrzeugs (56),
Einhängen der Gitteranordnung (18) mittels mehrerer Führungselemente (32) an die Schienenvorrichtung (12), sodass die Gitteranordnung (18) von der Schienenvorrichtung (12) herunterhängt,
Einschieben der Gitteranordnung (18) mittels der Führungselemente (32) an der Schienenvorrichtung (12) zu einer Installationsposition,
Ausrichten der Gitteranordnung (18) durch Schwenken um Schwenkgelenke (24) an oberen Enden (26) der Vertikalstützen (14) derart, dass die Vertikalstützen (14) vertikal angeordnet sind, und
Verbinden der Vertikalstützen (14) mit der Struktur (6) durch Verriegeln von ersten Verriegelungselementen (22), die an unteren Enden (23) der Vertikalstützen (14) angeordnet sind, mit an der Struktur (6) angeordneten zweiten Verriegelungselementen (20), sodass dadurch eine lasttragende Stützstruktur ausgebildet wird.

13. Verfahren nach Anspruch 12,
ferner aufweisend Arretieren der Führungselemente (32) an der Schienenvorrichtung (12).

14. Verfahren nach einem der Ansprüche 12 oder 13,
ferner aufweisend an das Verbinden der Vertikalstützen (14) anschließendes Entfernen von Schienenteilstücken (52, 53) zwischen den einzelnen Führungselementen (32).

15. Verfahren nach einem der Ansprüche 12 bis 14, ferner aufweisend
Anordnen mindestens eines elektrischen Verbrauchers an der Gitteranordnung (18) und Verbinden mittels einer Leitung mit einem elektrischen Abnehmer (44) vor dem Einhängen in die Schienenvorrichtung (12), und
Verschieben des Abnehmers (44) in einer in der Schienenvorrichtung (12) integrierten elektrischen Kontaktschiene (40) beim Verschieben der Gitteranordnung (18) zum Herstellen einer elektrischen Verbindung des mindestens einen elektrischen Verbrauchers an der Installationsposition.

## Claims

1. Structure and equipment system (2) for installation in an aircraft (56), comprising:
a plurality of vertical supports (14),
a rail device (12),
at least one connector (16),
a plurality of guiding elements (32),
a plurality of pivot joints (24), and
a plurality of locking devices (21),
wherein the rail device (12) can be attached to a structure (6) of the aircraft (56) and is designed to guide the guiding elements (32) along an axis of extension of the rail device (12) and, in so doing, move them relative to the structure (6),
wherein by means of the at least one connector (16), the vertical supports (14) are arranged parallel to and at a distance from one another and are connected to form a grid arrangement (18),
wherein the guiding elements (32) are arranged on the grid arrangement (18),
wherein the pivot joints (24) are attached to upper ends (26) of the vertical supports (14) and are designed to pivot the vertical supports (14) about the upper end (26) thereof,
wherein the locking devices (21) each have a first locking element (22) which is arranged at a lower end (23) of a vertical support (14) and can be locked in a second locking element (20) which can be positioned on the structure (6), and
wherein the grid arrangement (18) can be inserted into the structure of the aircraft (56) as far as an installation position by means of the guiding elements (32) on the rail device (12) with vertical supports (14) pivoted upwards from the vertical, by pivoting down into a vertical orientation, the first locking elements (22) can interlock with correspondingly arranged second locking elements (20) so that a load-bearing support structure can be formed thereby.

2. Structure and equipment system (2) according to Claim 1,
wherein the guiding elements (32) can be lockable to the rail device (12).

3. Structure and equipment system (2) according to Claim 1 or 2,
wherein the guiding elements (32) are in the form of rollers (32).

4. Structure and equipment system (2) according to any of the preceding claims,
wherein the rail device (12) comprises a track having a plurality of rail portions (52, 53).

5. Structure and equipment system (2) according to Claim 4,
wherein the rail portions (52, 53) can be fastened to the structure (6) at a distance from the end faces of one another and can be removed from the structure (6) of the aircraft (56) when the grid arrangement (18) is inserted.

6. Structure and equipment system (2) according to any of Claims 1 to 4,
wherein the rail device (12) remains on the structure (6) of the aircraft (56) when the support structure is produced.

7. Structure and equipment system (2) according to any of the preceding claims, further comprising
an electric contact rail (40) which can be fastened to the structure (6) in order to transmit electrical power and/or data and
at least one consumer (44) which is slidably mounted in the contact rail (40) and can be connected to at least one component that can be fastened to the grid arrangement (18).

8. Structure and equipment system (2) according to Claim 7,
wherein the electric contact rail (40) is integrated in the rail device (12).

9. Structure and equipment system (2) according to any of the preceding claims, further comprising
at least one cover panel which is arranged on the grid arrangement (18).

10. Structure and equipment system (2) according to any of the preceding claims,
wherein the at least one connector (16) has a supply conduit which is arranged on a laterally outward-facing side of the support structure.

11. Aircraft (56), comprising a fuselage (4) formed by a structure and at least one structure and equipment system (2) according to any of the preceding claims, wherein the structure and equipment system (2) is positioned in the fuselage (4) and connected to the structure (6).

12. Method for producing a load-bearing support structure, comprising the steps of:
connecting a plurality of vertical supports (14) arranged parallel to and at a distance from one another, by means of at least one connector (16), to form a grid arrangement (18),
attaching a rail device (12) to a structure (6) of an aircraft (56),
suspending the grid arrangement (18) by means of a plurality of guiding elements (32) on the rail device (12) so that the grid arrangement (18) hangs down from the rail device (12),
inserting the grid arrangement (18) as far as an installation position by means of the guiding elements (32) on the rail device (12),
orienting the grid arrangement (18) by pivoting about pivot joints (24) at upper ends (26) of the vertical supports (14) in such a way that the vertical supports (14) are arranged vertically, and
connecting the vertical supports (14) to the structure (6) by locking first locking elements (22), which are arranged at lower ends (23) of the vertical supports (14), to second locking elements (20) arranged on the structure (6), so that a load-bearing support structure is formed thereby.

13. Method according to Claim 12,
further comprising fixing the guiding elements (32) to the rail device (12).

14. Method according to either Claim 12 or Claim 13,
further comprising, following the connection of the vertical supports (14), removing rail portions (52, 53) between the individual guiding elements (32).

15. Method according to any of Claims 12 to 14, further comprising
arranging at least one electrical load on the grid arrangement (18) and connecting, by means of a conduit, to an electrical consumer (44) before the suspension in the rail device (12), and
sliding the consumer (44) in an electric contact rail (40) integrated in the rail device (12) when sliding the grid arrangement (18) to produce an electrical connection of the at least one electrical load in the installation position.

## Revendications

1. Système structural et d'équipement (2) destiné à être installé dans un aéronef (56), comprenant :
une pluralité de supports verticaux (14),
un dispositif (12) formant rail,
au moins un organe de liaison (16),
une pluralité d'éléments de guidage (32),
une pluralité d'articulations pivotantes (24), et
plusieurs dispositifs de verrouillage (21),
le dispositif (12) formant rail étant apte à être monté sur une structure (6) de l'aéronef (56) et étant conçu pour guider les éléments de guidage (32) le long d'un axe d'extension du dispositif (12) formant rail tout en les déplaçant par rapport à la structure (6),
les supports verticaux (14) étant agencés parallèlement et à distance les uns des autres au moyen dudit au moins un organe de liaison (16) et étant reliés de façon à former un agencement de grille (18),
les éléments de guidage (32) étant agencés sur l'agencement de grille (18),
les articulations pivotantes (24) étant montées sur des extrémités supérieures (26) des supports verticaux (14) et étant conçues de façon à faire pivoter les supports verticaux (14) autour de leur extrémité supérieure (26), les dispositifs de verrouillage (21) comprenant chacun un premier élément de verrouillage (22) agencé à une extrémité inférieure (23) d'un montant vertical (14) et verrouillable dans un deuxième élément de verrouillage (20) apte à être positionné sur la structure (6), et l'agencement de grille (18) est apte à être inséré dans la structure de l'aéronef (56) vers une position d'installation au moyen des éléments de guidage (32) sur le dispositif (12) formant rail avec les supports verticaux (14) pivotés vers le haut à partir de la verticale, les premiers éléments de verrouillage (22) étant, par pivotement vers le bas dans une orientation verticale, aptes à être verrouillés dans des deuxièmes éléments de verrouillage (20) agencés de manière correspondante, de sorte qu'une structure de support supportant la charge est, de cette façon, apte à être formée.

2. Système structural et d'équipement (2) selon la revendication 1,
dans lequel les éléments de guidage (32) sont aptes à être verrouillés sur le dispositif (12) formant rail.

3. Système structural et d'équipement (2) selon la revendication 1 ou la revendication 2,
dans lequel les éléments de guidage (32) sont réalisés sous forme de galets (32).

4. Système structural et d'équipement (2) selon l'une des revendications précédentes,
dans lequel le dispositif (12) formant rail comporte un tronçon de rail comprenant plusieurs tronçons de rail (52, 53).

5. Système structural et d'équipement (2) selon la revendication 4,
dans lequel les tronçons de rail (52, 53) sont aptes à être fixés à la structure (6) à une distance frontale les uns des autres et sont aptes à être retirés de la structure (6) de l'aéronef (56) lorsque l'agencement de grille (18) est inséré.

6. Système structural et d'équipement (2) selon l'une des revendications 1 à 4,
dans lequel le dispositif (12) formant rail reste sur la structure (6) de l'aéronef (56) lorsque la structure de support est fabriquée.

7. Système structural et d'équipement (2) selon l'une des revendications précédentes, comprenant en outre
un rail de contact électrique (40) apte à être fixé à la structure (6) pour transmettre de la puissance électrique et/ou des données, et
au moins un récepteur (44) agencé de manière coulissante dans le rail de contact (40), qui est apte à être relié à au moins un composant apte à être fixé à l'agencement de grille (18).

8. Système structural et d'équipement (2) selon la revendication 7,
dans lequel le rail de contact électrique (40) est intégré dans le dispositif (12) formant rail.

9. Système structural et d'équipement (2) selon l'une des revendications précédentes, comprenant en outre
au moins un panneau d'habillage agencé sur l'agencement de grille (18).

10. Système structural et d'équipement (2) selon l'une des revendications précédentes,
dans lequel ledit au moins un organe de liaison (16) comprend un conduit d'alimentation agencé sur une face de la structure de support orientée latéralement vers l'extérieur.

11. Aéronef (56) comprenant un fuselage (4) formé par une structure et au moins un système structural et d'équipement (2) selon l'une des revendications précédentes, le système structural et d'équipement (2) étant positionné dans le fuselage (4) et relié à la structure (6).

12. Procédé de fabrication d'une structure de support de charge, comprenant les étapes consistant à :
relier plusieurs supports verticaux (14) parallèles et espacés les uns des autres au moyen d'au moins un organe de liaison (16) pour former un agencement de grille (18), fixer un dispositif (12) formant rail à une structure (6) d'un aéronef (56),
accrocher l'agencement de grille (18) au dispositif (12) formant rail au moyen de plusieurs éléments de guidage (32), de sorte que l'agencement de grille (18) pende du dispositif (12) formant rail,
insérer l'agencement de grille (18) sur le dispositif (12) formant rail au moyen des éléments de guidage (32), vers une position d'installation,
orienter l'agencement de grille (18) en le faisant pivoter autour d'articulations de pivotement (24) situées à des extrémités supérieures (26) des supports verticaux (14) de telle sorte que les supports verticaux (14) soient agencés verticalement, et
relier les montants verticaux (14) à la structure (6), en verrouillant des premiers éléments de verrouillage (22) agencés à des extrémités inférieures (23) des montants verticaux (14) à des deuxièmes éléments de verrouillage (20) agencés sur la structure (6), formant ainsi une structure de support de charge.

13. Procédé selon la revendication 12,
comprenant en outre le fait de verrouiller les éléments de guidage (32) sur le dispositif (12) formant rail.

14. Procédé selon l'une des revendications 12 ou 13, comprenant en outre, après avoir assemblé les supports verticaux (14), le fait d'enlever des tronçons de rail (52, 53) entre les différents éléments de guidage (32).

15. Procédé selon l'une des revendications 12 à 14, présentant en outre
le fait d'agencer au moins un consommateur électrique sur l'agencement de grille (18) et de le relier par une ligne à un récepteur électrique (44) avant de l'accrocher au dispositif (12) formant rail, et
déplacer le récepteur (44) dans un rail de contact électrique (40) intégré dans le dispositif (12) formant rail lors du déplacement de l'agencement de grille (18) pour établir une connexion électrique dudit au moins un consommateur électrique à la position d'installation.
